# EUROPÄISCHE PATENTANMELDUNG

(11) **EP 3 528 108 A1**
(43) Veröffentlichungstag der Anmeldung: **21.08.2019**
(21) Anmeldenummer: 19157729.5
(22) Anmeldetag: 18.02.2019
(51) Int. Cl.: G06F 8/30, G06F 8/20, G06F 9/455, G05B 19/418, G05B 19/042

(54) **VEREINFACHTE PROGRAMMERSTELLUNG FÜR KOMPONENTEN VON AUTOMATISIERUNGSSYSTEMEN**

(30) Priorität: 16.02.2018 DE 102018202398
(71) Anmelder: Siemens Aktiengesellschaft, 80333 München (DE)
(72) Erfinder: Hahne, Michael, 92289 Ursensollen (DE); Koppmann, Martin, 92271 Freihung (DE)

(57) **Zusammenfassung**

Ein Engineering-Systems (1) weist instanziierbare Beschreibungen (6) von möglichen Komponenten (5) eines realen Automatisierungssystems auf. Das Engineering-System (1) nimmt von einem Benutzer (7) Instanziierungen der Beschreibungen (6) entgegen und definiert korrespondierende virtuelle Komponenten (8) . Es bildet mindestens ein Paar miteinander kommunizierender virtueller Komponenten (8a, 8b), die jeweils eine erste und eine zweite virtuelle Komponente (8a, 8b) umfassen. Das Engineering-System (1) bildet jeweilige virtuelle Adressräume (9a, 9b) der virtuellen Komponenten (8a, 8b) 1:1 aufeinander ab. Es nimmt vom Benutzer (7) für die erste virtuelle Komponente (8a) eine Parametrierung (P) entgegen, die festlegt, an welcher Stelle des virtuellen Adressraums (9a) der ersten virtuellen Komponente (8a) welche Variable mit der zweiten virtuellen Komponente (8b) ausgetauscht werden soll. Es nimmt vom Benutzer (7) unter Verwendung von Variablennamen, unter denen im Rahmen einer Programmierung der zweiten virtuellen Komponente (8b) auf Stellen des virtuellen Adressraums (9b) der zweiten virtuellen Komponente (8b) zugegriffen werden kann, eine Programmierung für die zweite virtuelle Komponente (8b) entgegen. Es erstellt getrennt für die einzelnen realen Komponenten (5) anhand der Parametrierung (P) und/oder der Programmierung der jeweils korrespondierenden virtuellen Komponente (8) den jeweiligen Komponentencode (4) und stellt ihn für die jeweilige reale Komponente (5) bereit. Das Engineering-System (1) legt die Variablennamen aufgrund der Parametrierung (P) der ersten virtuellen Komponente (8a) automatisch und parametrierungsspezifisch fest.

## Beschreibung

Die vorliegende Erfindung geht aus von einem Verfahren zum Erstellen von Komponentencode für reale Komponenten eines realen Automatisierungssystems mittels eines Engineering-Systems,
- wobei innerhalb des Engineering-Systems instanziierbare Beschreibungen von möglichen realen Komponenten hinterlegt sind,
- wobei das Engineering-System von einem Benutzer des Engineering-Systems Instanziierungen der Beschreibungen entgegennimmt, mit den instanziierten Beschreibungen korrespondierende virtuelle Komponenten definiert und den virtuellen Komponenten Komponentennamen zuordnet,
- wobei das Engineering-System mindestens ein Paar von virtuellen Komponenten bildet, die jeweils eine erste und eine zweite virtuelle Komponente umfassen, die miteinander kommunizieren sollen,
- wobei das Engineering-System für das jeweilige Paar jeweilige virtuelle Adressräume der jeweiligen ersten und zweiten virtuellen Komponenten 1:1 aufeinander abbildet,
- wobei das Engineering-System vom Benutzer für die jeweilige erste virtuelle Komponente eine Parametrierung entgegennimmt, die festlegt, an welcher Stelle des virtuellen Adressraums der jeweiligen ersten virtuellen Komponente welche Variable mit der jeweiligen zweiten virtuellen Komponente ausgetauscht werden soll,
- wobei das Engineering-System vom Benutzer unter Verwendung von zweiten Variablennamen, unter denen im Rahmen einer Programmierung der jeweiligen zweiten virtuellen Komponente auf Stellen des virtuellen Adressraums der jeweiligen zweiten virtuellen Komponente zugegriffen werden kann, eine Programmierung für die jeweilige zweite virtuelle Komponente entgegennimmt,
- wobei das Engineering-System getrennt für die einzelnen realen Komponenten anhand der Parametrierung und/oder der Programmierung der jeweils korrespondierenden virtuellen Komponente den jeweiligen Komponentencode erstellt und den jeweiligen Komponentencode für die jeweilige reale Komponente bereitstellt.

Die vorliegende Erfindung geht weiterhin aus von einem Computerprogramm für ein Engineering-System, wobei das Computerprogramm Maschinencode umfasst, der von dem Engineering-System abarbeitbar ist, wobei die Abarbeitung des Maschinencodes durch das Engineering-System bewirkt, dass das Engineering-System ein derartiges Verfahren ausführt.

Die vorliegende Erfindung geht weiterhin aus von einem Engineering-System, wobei das Engineering-System mit einem derartigen Computerprogramm programmiert ist.

Ein Automatisierungssystem besteht in der Regel aus mindestens einer Zentraleinheit bzw. Steuereinrichtung und dezentralen Peripherieeinheiten.

Es ist möglich, dass eine oder mehrere der Peripherieeinheiten reine Eingabebaugruppen sind. In diesem Fall lesen die entsprechenden Peripherieeinheiten von Sensoren Eingangssignale ein, bereiten die Eingangssignale auf und leiten die aufbereiteten Eingangssignale an die Zentraleinheit weiter. Alternativ ist es möglich, dass eine oder mehrere der Peripherieeinheiten reine Ausgabebaugruppen sind. In diesem Fall nehmen die Peripherieeinheiten von der Zentraleinheit Steuerbefehle entgegen und steuern Aktoren entsprechend an. Ebenso ist es möglich, dass eine oder mehrere der Peripherieeinheiten gemischte Ein-/Ausgabebaugruppen sind. In diesem Fall nehmen die entsprechenden Baugruppen beide Funktionalitäten wahr.

Zur Kommunikation mit der Zentraleinheit stellen die Peripheriebaugruppen jeweilige Adressbereiche bereit, über die von der Zentraleinheit auf die entsprechenden Daten der jeweiligen Peripheriebaugruppe zugegriffen werden kann. Die entsprechenden Adressen sind der Zentraleinheit bekannt.

Im Rahmen der Programmierung der Zentraleinheit werden üblicherweise nicht die Adressen der entsprechenden Variablen als solche benutzt, sondern damit verknüpfte Namen und Bezeichnungen. Hierfür ordnet ein Benutzer eines Engineering-Systems zu Beginn der Erstellung des Programms der Zentraleinheit den entsprechenden Adressen einen jeweiligen Variablennamen zu, der sodann im Rahmen der weiteren Erstellung des Programms der Zentraleinheit verwendet wird.

Bei einfachen Peripheriebaugruppen - Beispiele sind die oben genannten Eingabebaugruppen, Ausgabebaugruppen und gemischten Ein-/Ausgabebaugruppen - können an die Baugruppen prinzipiell beliebige Sensoren und Aktoren angeschlossen werden, sofern sie mit der entsprechenden Baugruppe kompatibel sind. Diese Baugruppen werden daher nicht parametriert, sondern stellen über ihren jeweiligen Adressbereich stets die Sensorsignale der an sie angeschlossenen Sensoren zur Verfügung bzw. geben die an sie übermittelten Steuerbefehle an die an sie angeschlossenen Aktoren aus. Hier ist eine Zuordnung von Namen nur insoweit möglich, als die einzelnen Signale durchnummeriert werden können.

Es gibt aber auch komplexere Peripheriebaugruppen, die parametriert werden müssen. Beispiele derartiger Baugruppen sind Steuergeräte für Motoren, Schaltgeräte, Frequenzumrichter, Antriebe und andere mehr. Auch eine Mensch-Maschine-Schnittstelle ist eine derartige komplexere Peripheriebaugruppe.

Die Parametrierung derartiger komplexer Baugruppen erfolgt oftmals in zweierlei Hinsicht. Zum einen kann die interne Funktionalität und Wirkungsweise der entsprechenden Peripheriebaugruppe parametriert werden. Zum anderen kann parametriert werden, welche Daten über welche Adressen zwischen der Zentraleinheit und der entsprechenden Peripheriebaugruppe ausgetauscht werden. Insbesondere muss im Rahmen der Parametrierung festgelegt werden, welche Eingangssignale von der entsprechenden Peripheriebaugruppe über welche Adressen an die Zentraleinheit übermittelt werden sollen und welche Ausgangssignale der entsprechenden Peripheriebaugruppe über welche Adressen von der Zentraleinheit zur Verfügung gestellt werden sollen.

Es ist möglich, dass die Parametrierung der internen Funktionalität der entsprechenden Peripheriebaugruppe und die Parametrierung der Kommunikation mit der Zentraleinheit unabhängig voneinander erfolgen können. In diesem Fall betrifft die vorliegende Erfindung nur die Parametrierung der Kommunikation mit der Zentraleinheit. Alternativ ist es möglich, dass im Rahmen der Parametrierung der Peripheriebaugruppe die Parametrierung der internen Funktionalität der entsprechenden Peripheriebaugruppe und die Parametrierung der Kommunikation mit der Zentraleinheit miteinander gekoppelt sind. In diesem Fall betrifft die vorliegende Erfindung auch die Parametrierung der internen Funktionalität der entsprechenden Peripheriebaugruppe, aber nur insoweit die Parametrierung der Kommunikation mit der Zentraleinheit betroffen ist.

Die Definitionen bzw. Beschreibungen der möglichen Baugruppen des Automatisierungssystems - dies gilt sowohl für die Zentraleinheiten als auch für die einfachen Peripheriebaugruppen als auch für die komplexeren Peripheriebaugruppen - sind in einem Engineering-System, mittels dessen die Zentraleinheiten programmiert werden können und die Peripheriebaugruppen parametriert werden können, in instanziierbarer Form enthalten.

Zum Erstellen der Programmierung der Zentraleinheit und zum Erstellen der Parametrierungen der Peripheriebaugruppen bzw. allgemein zum Erstellen des Komponentencodes für reale Komponenten eines realen Automatisierungssystems nimmt das Engineering-System von einem Benutzer des Engineering-Systems Instanziierungen der Beschreibungen entgegen. Aufgrund der entsprechenden Vorgaben des Benutzers definiert das Engineering-System die korrespondierenden virtuellen Komponenten und ordnet ihnen Komponentennamen zu.

Sodann bildet das Engineering-System mindestens ein Paar von virtuellen Komponenten, die jeweils eine erste und eine zweite virtuelle Komponente umfassen, die miteinander kommunizieren sollen. Es ist möglich, dass die Paarbildung explizit erfolgt. Alternativ ist es möglich, dass die Paarbildung nur rein logisch im Rahmen der Ausführung der vorliegenden Erfindung erfolgt.

Sodann definiert das Engineering-System für das jeweilige Paar in den jeweiligen ersten und zweiten virtuellen Komponenten jeweilige virtuelle Adressräume gleicher vorbestimmter Größe und bildet die Adressräume 1:1 aufeinander ab.

Die erste virtuelle Komponente ist in der Regel eine virtuelle Peripheriebaugruppe. Falls die zugehörige reale Komponente eine parametrierbare komplexere Peripheriebaugruppe ist, nimmt das Engineering-System sodann vom Benutzer für die jeweilige erste virtuelle Komponente eine Parametrierung entgegen. Die Parametrierung legt fest, an welcher Stelle des virtuellen Adressraums der jeweiligen ersten virtuellen Komponente welche Variable mit der jeweiligen zweiten virtuellen Komponente ausgetauscht werden soll.

Weiterhin nimmt das Engineering-System vom Benutzer unter Verwendung von zweiten Variablennamen, unter denen im Rahmen einer Programmierung der jeweiligen zweiten virtuellen Komponente auf Stellen des virtuellen Adressraums der jeweiligen zweiten virtuellen Komponente zugegriffen werden kann, eine Programmierung für die jeweilige zweite virtuelle Komponente entgegen. Die zweite virtuelle Komponente ist in der Regel eine Zentraleinheit.

Nach Abschluss der Parametrierung der ersten virtuellen Komponente und der Programmierung der zweiten virtuellen Komponente erstellt das Engineering-System - getrennt für die einzelnen virtuellen Komponenten - anhand von deren Parametrierung und/oder deren Programmierung den jeweiligen Komponentencode und stellt den jeweiligen Komponentencode für die jeweils korrespondierende reale Komponente bereit. Insbesondere kann der jeweilige Komponentencode in die jeweilige reale Komponente geladen werden.

Auf dieser im Stand der Technik bekannten Vorgehensweise baut die vorliegende Erfindung auf.

Im Stand der Technik wird durch die Parametrierung der ersten virtuellen Komponente auf Seiten der zweiten virtuellen Komponente nur der entsprechende Adressbereich definiert und auf den Adressbereich der ersten virtuellen Komponente abgebildet. Weitergehende Maßnahmen erfolgen nicht. Insbesondere muss im Stand der Technik der Benutzer für die einzelnen Speicherplätze des entsprechenden Adressraums der zweiten virtuellen Komponente einzeln wissen, welche Variable über diesen Speicherplatz ausgetauscht wird und ob eine Übertragung von der ersten zur zweiten virtuellen Komponente oder umgekehrt erfolgt. Weiterhin muss der Benutzer den einzelnen Speicherplätzen einzeln Namen zuordnen. Diese Vorgehensweise ist mühsam, umständlich und - insbesondere soweit es die korrekte Verwendung der Variablen im Rahmen der Programmierung der zweiten virtuellen Komponente betrifft - oftmals auch fehlerträchtig.

Die Aufgabe der vorliegenden Erfindung besteht darin, Möglichkeiten zu schaffen, mittels derer die Programmierung der zweiten virtuellen Komponente vereinfacht und verbessert werden kann.

Die Aufgabe wird durch ein Verfahren zum Erstellen von Komponentencode für reale Komponenten eines realen Automatisierungssystems mittels eines Engineering-Systems mit den Merkmalen des Anspruchs 1 gelöst. Vorteilhafte Ausgestaltungen des erfindungsgemäßen Verfahrens sind Gegenstand der abhängigen Ansprüche 2 bis 7.

Erfindungsgemäß wird ein Verfahren der eingangs genannten Art dadurch ausgestaltet, dass das Engineering-System die zweiten Variablennamen aufgrund der Parametrierung der jeweiligen ersten virtuellen Komponente automatisch und parametrierungsspezifisch festlegt.

Es werden also durch die Parametrierung der ersten virtuellen Komponente automatisch die Variablennamen, die im Rahmen der Programmierung der zweiten virtuellen Komponente verwendet werden, definiert. Hierbei werden nicht nur als solches Namen vergeben, sondern die Namen werden in Abhängigkeit von der konkreten Parametrierung der ersten virtuellen Komponente vergeben. Dadurch wird eine einfache und konsistente Programmierung der jeweiligen zweiten virtuellen Komponente ermöglicht. Dies gilt ganz besonders, wenn als zweite Variablennamen sogenannte sprechende Namen gewählt werden.

In einer bevorzugten Ausgestaltung des Verfahrens ordnet das Engineering-System beim Instanziieren einer Beschreibung der dadurch definierten virtuellen Komponente als Komponentennamen einen Namen zu, der aus einem für alle durch Instanziieren derselben Beschreibung definierten virtuellen Komponenten einheitlichen Typteil und einem für jede einzelne derartige virtuelle Komponente eigenen Individualteil besteht.

Dadurch wird bereits beim Instanziieren einer Beschreibung ein eindeutiger Komponentenname kreiert, unter dem die entsprechende virtuelle Komponente innerhalb des Engineering-Systems verwaltet und referenziert werden kann.

In vielen Fällen ist bezüglich mindestens eines Paares von virtuellen Komponenten die erste virtuelle Komponente ein virtuelles Peripheriegerät oder eine Mensch-Maschine-Schnittstelle und die zweite virtuelle Peripherieeinheit eine Zentraleinheit.

In einer besonders bevorzugten Ausgestaltung des Verfahrens ist vorgesehen,
- dass die durch das Vorgeben der Parametrierung für die jeweilige erste virtuelle Komponente parametrierungsspezifisch festgelegten zweiten Variablennamen jeweils einen ersten und einen zweiten Teil umfassen,
- dass der jeweilige erste Teil einheitlich durch den Komponentennamen der jeweiligen ersten virtuellen Komponente festgelegt ist, insbesondere mit diesem Komponentennamen identisch ist, und
- dass der jeweilige zweite Teil durch die Variable festgelegt ist, die aufgrund der Parametrierung der jeweiligen ersten virtuellen Komponente an der korrespondierenden Stelle des virtuellen Adressraums der jeweiligen zweiten virtuellen Komponente mit der jeweiligen zweiten virtuellen Komponente ausgetauscht werden soll.

Dadurch wird die Programmierung der jeweiligen zweiten virtuellen Komponente noch weiter vereinfacht.

Ganz besonders gilt dies in einer Ausgestaltung, bei der
- das Engineering-System dem Benutzer im Rahmen einer Anzeige der Parametrierung der jeweiligen ersten virtuellen Komponente auf die jeweilige erste virtuelle Komponente bezogene erste Variablennamen für die Variablen anzeigt, die an den entsprechenden Stellen des virtuellen Adressraums der jeweiligen ersten virtuellen Komponente mit der jeweiligen zweiten virtuellen Komponente ausgetauscht werden sollen, und
- der jeweilige zweite Teil der zweiten Variablennamen der jeweiligen zweiten virtuellen Komponente mit dem jeweils korrespondierenden ersten Variablennamen der jeweiligen ersten virtuellen Komponente übereinstimmt.

Oftmals bietet das Engineering-System dem Benutzer die Möglichkeit, den Komponentennamen jederzeit zu ändern. Insbesondere kann eine derartige Änderung des Komponentennamens auch während oder nach einer Parametrierung der jeweiligen ersten virtuellen Komponente erfolgen. Wenn eine derartige Änderung des Komponentennamens nach einer Parametrierung der jeweiligen ersten virtuellen Komponente erfolgt, ist es von Vorteil, wenn das Engineering-System aufgrund der Änderung des Komponentennamens der jeweiligen ersten virtuellen Komponente automatisch den ersten Teil der zweiten Variablennamen für die jeweilige zweite virtuelle Komponente nachführt. Die zweiten Teile der zweiten Variablennamen bleiben in diesem Fall hingegen unverändert erhalten.

Oftmals bietet das Engineering-System dem Benutzer weiterhin die Möglichkeit, die Parametrierung der jeweiligen ersten virtuellen Komponente jederzeit zu ändern. In diesem Fall ist es von Vorteil, wenn das Engineering-System aufgrund der Änderung der Parametrierung automatisch die zweiten Variablennamen der zugehörigen Variablen für die jeweilige zweite virtuelle Komponente nachführt.

Die Aufgabe wird weiterhin durch ein Computerprogramm für ein Engineering-System mit den Merkmalen des Anspruchs 8 gelöst. Erfindungsgemäß bewirkt die Abarbeitung des Maschinencodes durch das Engineering-System, dass das Engineering-System ein erfindungsgemäßes Verfahren ausführt.

Die Aufgabe wird weiterhin durch ein Engineering-System mit den Merkmalen des Anspruchs 9 gelöst. Erfindungsgemäß ist das Engineering-System mit einem erfindungsgemäßen Computerprogramm programmiert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden.

Hierbei zeigen in schematischer Darstellung:
- FIG 1: ein Engineering-System,
- FIG 2: beispielhaft eine mögliche Ausgestaltung eines Automatisierungssystems,
- FIG 3: ein Ablaufdiagramm,
- FIG 4: Adressräume von virtuellen Komponenten,
- FIG 5: eine Parametrierung und eine Vergabe von Variablennamen,
- FIG 6: eine Änderung von Namen und
- FIG 7: eine weitere Änderung von Namen.

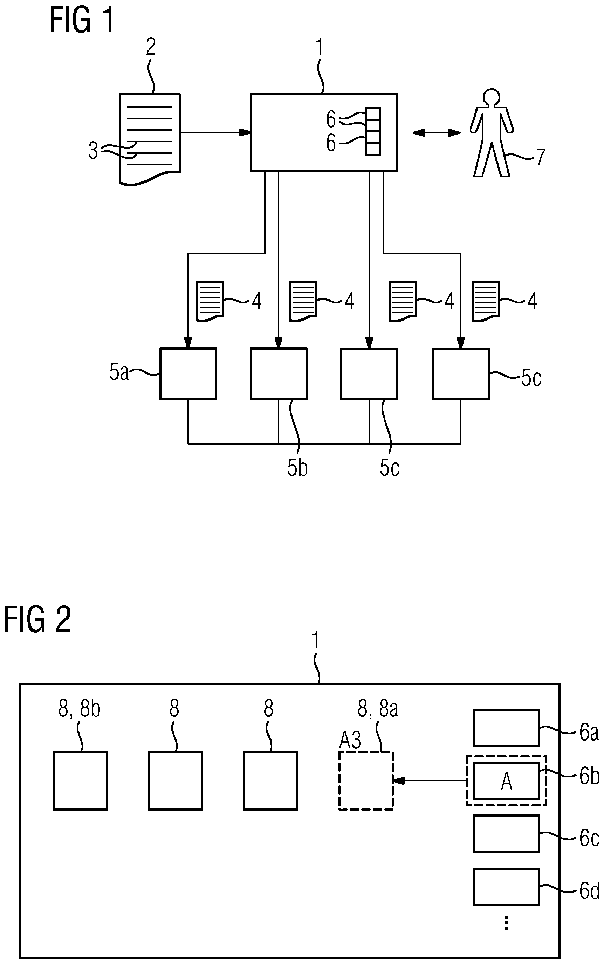

Gemäß FIG 1 ist ein Engineering-System 1 mit einem Computerprogramm 2 programmiert. Das Computerprogramm 2 umfasst Maschinencode 3, der von dem Engineering-System 1 abarbeitbar ist. Die Abarbeitung des Maschinencodes 3 durch das Engineering-System 1 bewirkt, dass mittels des Engineering-Systems 1 Komponentencode 4 für reale Komponenten 5 eines realen Automatisierungssystems erstellt wird. Das Engineering-System 1 führt hierbei ein Verfahren aus, das nachstehend in Verbindung mit den weiteren FIG näher erläutert wird.

Das reale Automatisierungssystem umfasst reale Komponenten 5. Beispiele derartiger Komponenten sind eine Zentraleinheit 5a, eine Mensch-Maschine-Schnittstelle 5b und Peripherieeinheiten 5c verschiedener Art. Innerhalb des Engineering-Systems 1 sind entsprechend der Darstellung in den FIG 1 und 2 instanziierbare Beschreibungen 6 von möglichen realen Komponenten 5 hinterlegt.

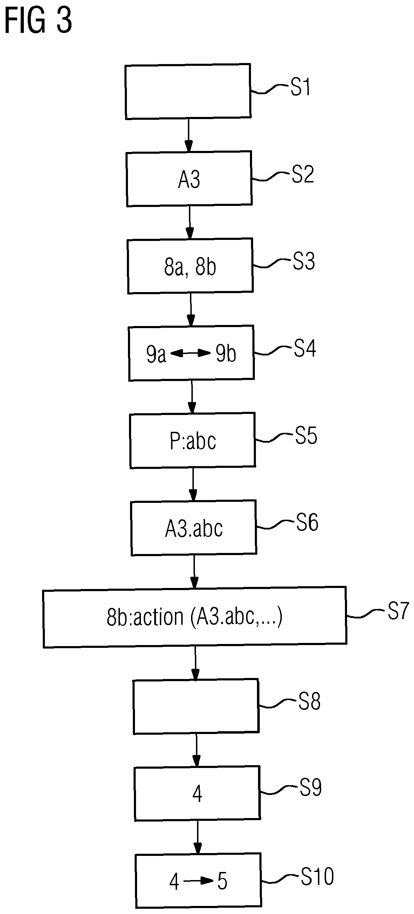

Das Engineering-System 1 nimmt gemäß FIG 3 in einem Schritt S1 von einem Benutzer 7 des Engineering-Systems Instanziierungen der Beschreibungen 6 entgegen. Beispielsweise hat der Benutzer 7 in der Darstellung gemäß FIG 2 soeben die gestrichelt umrandete Beschreibung 6b selektiert. Aufgrund der Vorgabe des Benutzers 7 definiert das Engineering-System 1 in einem Schritt S2 eine korrespondierende virtuelle Komponente 8 (siehe ebenfalls FIG 2) und ordnet dieser virtuellen Komponente 8 einen Namen zu. Dieser Name wird zur sprachlichen Unterscheidung von anderen, später eingeführten Namen nachfolgend als Komponentenname bezeichnet. Insbesondere ordnet das Engineering-System 1 der entsprechenden virtuellen Komponente 8 beim Instanziieren der entsprechenden Beschreibung 6 als Komponentennamen einen generischen Namen zu.

Der generische Name kann aus einem ersten und einem zweiten Teil bestehen. Der erste Teil, nachfolgend als Typteil bezeichnet, ist in diesem Fall für alle virtuelle Komponenten 8 einheitlich, die durch Instanziieren derselben Beschreibung 6 definiert sind. Beispielsweise kann entsprechend der Darstellung in FIG 2 jedes Mal, wenn die Beschreibung 6b instanziiert wird, der zugeordnete Komponentenname als Typteil die Bezeichnung "A" erhalten. Der zweite Teil des zugeordneten Komponentennames, nachfolgend als Individualteil bezeichnet, ist individuell für die definierte virtuelle Komponente 8 bestimmt. Beispielsweise kann jedes Mal, wenn die Beschreibung 6b instanziiert wird, innerhalb des Engineering-Systems 1 ein Zähler (nicht dargestellt) um 1 inkrementiert werden und der jeweilige Zählerstand als Individualteil für den Komponentennamen der jeweiligen virtuellen Komponente 8 verwendet werden. Wenn beispielsweise entsprechend der Darstellung in FIG 2 die Beschreibung 6b zum dritten Mal instanziiert wird, kann der zugeordnete Komponentenname als Individualteil die Bezeichnung "3" erhalten, so dass der Komponentenname insgesamt "A3" lautet. Vorzugsweise ist der Typteil derart bestimmt, dass er für den Benutzer 7 signifikant ist, also bereits einen Hinweis auf die Funktionalität der entsprechenden virtuellen Komponente 8 liefert.

In einem Schritt S3 bildet das Engineering-System 1 Paare von virtuellen Komponenten 8. Jedes Paar umfasst eine jeweilige erste und eine jeweilige zweite virtuelle Komponente 8. Die Paare von virtuellen Komponenten 8 sind dadurch charakterisiert, dass die beiden virtuellen Komponenten 8 des jeweiligen Paares miteinander kommunizieren sollen. Die Anzahl an gebildeten Paaren kann nach Bedarf sein. Hierbei kann ein und dieselbe virtuelle Komponente auch eine der beiden virtuellen Komponenten mehrerer Paare sein. Beispielsweise ist es möglich, dass die in FIG 2 links dargestellte virtuelle Komponente 8 mit jeder der anderen in FIG 2 dargestellten virtuellen Komponenten 8 gepaart wird.

Nachfolgend wird stets nur noch ein einzelnes Paar von virtuellen Komponenten 8 betrachtet und demzufolge nur von der ersten virtuellen Komponente 8 und der zweiten virtuellen Komponente 8 gesprochen. Die entsprechenden Aussagen sind jedoch für alle jeweiligen Paare von virtuellen Komponenten 8 und damit die jeweilige erste und die jeweilige zweite virtuelle Komponente 8 des jeweiligen Paares gültig. Weiterhin wird die erste virtuelle Komponente 8 nachfolgend mit dem Bezugszeichen 8a versehen, die zweite virtuelle Komponente 8 mit dem Bezugszeichen 8b.

In der Regel ist die erste virtuelle Komponente 8a eine virtuelle Peripheriebaugruppe. Beispielsweise kann es sich um ein Motorsteuergerät, ein Steuergerät für ein Schaltgerät oder einen Frequenzumrichter oder ein Steuergerät für einen Antrieb handeln. Alternativ zu einer Peripheriebaugruppe kann es sich um eine Mensch-Maschine-Schnittstelle handeln. Wichtig ist im Rahmen der vorliegenden Erfindung, dass die erste virtuelle Komponente 8a parametrierbar ist. Die zweite virtuelle Peripherieeinheit 8b ist in der Regel eine Zentraleinheit. Eine Zentraleinheit ist dadurch gekennzeichnet, dass sie ein Steuerprogramm ausführt, aufgrund dessen sie Eingangssignale von anderen Komponenten entgegennimmt und Ausgangssignale ermittelt, die sie an andere Komponenten ausgibt.

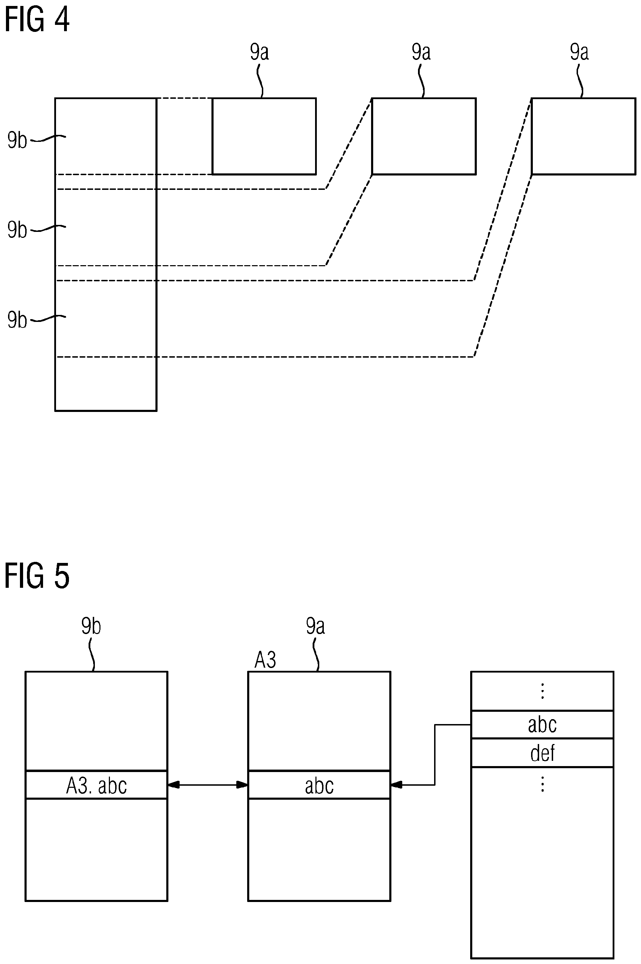

Gemäß den FIG 4 und 5 bildet das Engineering-System 1 in einem Schritt S4 einen virtuellen Adressraum 9a der ersten virtuellen Komponente 8a 1:1 auf einen virtuellen Adressraum 9b der zweiten virtuellen Komponente 8b ab. Die virtuellen Adressräume 9a, 9b sind somit insbesondere gleich groß. Es ist möglich, dass das Engineering-System 1 die virtuellen Adressräume 9a, 9b im Schritt S4 definiert. Alternativ ist es möglich, dass die virtuellen Adressräume 9a, 9b bereits durch die erste und die zweite virtuelle Komponente 8b als solche definiert sind.

In einem Schritt S5 nimmt das Engineering-System 1 vom Benutzer 7 für die erste virtuelle Komponente 8a eine Parametrierung P (oder einen Teil der Parametrierung P) entgegen. Die Parametrierung P legt entsprechend der Darstellung in FIG 5 fest, welche Variable - gemäß FIG 5 beispielsweise die Variable mit dem Variablennamen abc - an welcher Stelle des virtuellen Adressraums 9a der ersten virtuellen Komponente 8a gespeichert werden soll. Dies gilt unabhängig davon, ob die Variable abc von der ersten virtuellen Komponente 8a zur Übermittlung an die zweite virtuelle Komponente 8b bereitgestellt werden soll oder ob die Variable abc von der zweiten virtuellen Komponente 8b bereitgestellt wird, so dass sie von der ersten virtuellen Komponente 8a übernommen werden kann. Die Variablennamen, die vom Engineering-System 1 im Rahmen der Parametrierung der ersten virtuellen Komponente 8a verwendet werden, sind auf die erste virtuelle Komponente 8a bezogen. Sie werden nachfolgend als erste Variablennamen bezeichnet, um sie sprachlich von Variablennamen unterscheiden zu können, die später in Verbindung mit der zweiten virtuellen Komponente 8b eingeführt werden.

Den einzelnen Speicherplätzen des Adressraums 9a können Variable verschiedener Art und Größe zugeordnet sein, beispielsweise logische Variable (1 Bit), binäre Variable (1 Bit), digitale Werte (typisch 1 Byte oder 2 Byte) oder analoge Werte (meist 4 oder 8 Byte).

Zur Vorgabe der Parametrierung P bzw. des entsprechenden Teils der Parametrierung P kann das Engineering-System 1 beispielsweise vom Benutzer 7 eine Auswahl eines bestimmten Speicherplatzes des Adressraums 9a entgegennehmen. Aufgrund der 1:1-Zuordnung der Adressräume 9a, 9b kann alternativ ebenso eine Auswahl eines bestimmten Speicherplatzes des Adressraums 9b erfolgen. In beiden Fällen ist mit dem Speicherplatz des einen Adressraums 9a, 9b der korrespondierende Speicherplatz des jeweils anderen Adressraums 9b, 9a eindeutig bestimmt.

Aufgrund der Auswahl kann das Engineering-System 1 dem Benutzer 7 entsprechend der Darstellung in FIG 5 eine Liste aller möglicher Variablen bzw. deren zugehörige Namen anzeigen. Dadurch kann der Benutzer 7 dem Engineering-System 1 auf einfache Weise einzeln für jeden Speicherplatz die jeweilige Auswahl der Variablen vorgeben. Die entsprechende Variable wird dann vom Engineering-System 1 dem ausgewählten Speicherplatz zugeordnet. Ebenso ist es möglich, dass durch eine Konfigurierung der ersten virtuellen Komponente 8a, welche die Funktionalität der ersten virtuellen Komponente 8a festlegt, zugleich auch die Zuordnung bestimmter Variablen zu bestimmten Speicherplätzen festgelegt wird. Auch Mischformen sind möglich, dass beispielsweise ein erster Teil der Variablen durch eine Konfigurierung der ersten virtuellen Komponente 8a, welche die Funktionalität der ersten virtuellen Komponente 8a festlegt, festgelegt wird, und ein zweiter Teil der Variablen vom Benutzer 7 individuell und einzeln festgelegt wird.

In einem nachfolgenden Schritt S6 legt das Engineering-System 1 Variablennamen fest, unter denen im Rahmen einer Programmierung der zweiten virtuellen Komponente 8b auf Stellen des virtuellen Adressraums 9b der zweiten virtuellen Komponente 8b zugegriffen werden kann. Diese Festlegung erfolgt aufgrund der Parametrierung der ersten virtuellen Komponente 8a automatisch und parametrierungsspezifisch, d.h. spezifisch entsprechend der Parametrierung der ersten virtuellen Komponente 8a. Der Benutzer 7 muss dadurch zum einen die Namen für die einzelnen Variablen, die er im Rahmen der Programmierung der zweiten virtuellen Komponente 8b verwenden möchte, nicht mehr einzeln vorgeben. Weiterhin kann das Engineering-System 1 die Variablennamen bereits selbst derart festlegen, dass für den Benutzer 7 die Bedeutung der entsprechenden Variablen sofort ersichtlich ist.

In der Regel werden beispielsweise den verschiedenen Variablen durch das Engineering-System 1 auf Seiten der ersten virtuellen Komponente 8a bestimmte erste Variablennamen zugeordnet, beispielsweise der erste Variablenname abc für die in FIG 5 dargestellte Variable. Die ersten Variablennamen werden dem Benutzer 7 vom Engineering-System 1 im Rahmen einer Anzeige der Parametrierung der ersten virtuellen Komponente 8a angezeigt. Die ersten Variablennamen sind in der Regel derart bestimmt, dass sie innerhalb der Parametrierung der ersten virtuellen Komponente 8a "sprechend" sind, d.h. für den Benutzer 7 ohne weiteres sinnvoll interpretierbar sind. Aufbauend auf den ersten Variablennamen und dem Komponentennamen der ersten virtuellen Komponente 8a kann das Engineering-System 1 dadurch schnell und einfach auch auf Seiten der zweiten virtuellen Komponente 8b korrespondierende Variablennamen erstellen. Diese Variablennamen werden nachfolgend als zweite Variablennamen bezeichnet.

Beispielsweise können die zweiten Variablennamen jeweils einen ersten und einen zweiten Teil umfassen. Der jeweilige erste Teil kann in diesem Fall einheitlich durch den Komponentennamen der jeweiligen ersten virtuellen Komponente festgelegt sein. Insbesondere kann der erste Teil mit diesem Komponentennamen identisch sein. Alle auf die erste virtuelle Komponente 8a referenzierten zweiten Variablennamen enthalten in dem gegebenen Beispiel also beispielsweise "A3". Der jeweilige zweite Teil hingegen ist durch die Variable festgelegt, die aufgrund der Parametrierung der ersten virtuellen Komponente 8a mit der zweiten virtuellen Komponente 8b ausgetauscht werden soll. Insbesondere kann der zweite Teil mit dem jeweils korrespondierenden ersten Variablennamen der ersten virtuellen Komponente 8a übereinstimmen. Der zweite Variablenname für die Variable mit dem ersten Variablennamen abc der ersten virtuellen Komponente 8a mit dem Komponentennamen A3 könnte also beispielsweise "A3.abc" lauten.

In einem Schritt S7 nimmt das Engineering-System 1 sodann vom Benutzer 7 eine Programmierung für die zweite virtuelle Komponente 8b entgegen. Die Vorgabe dieser Programmierung erfolgt unter Verwendung der im Schritt S6 festgelegten zweiten Variablennamen.

In einem Schritt S8 nimmt das Engineering-System 1 vom Benutzer 7 einen Beendigungsbefehl entgegen. Aufgrund des Beendigungsbefehls erstellt das Engineering-System 1 in einem Schritt S9 für die einzelnen realen Komponenten 5 den jeweiligen Komponentencode 4. Das Erstellen des jeweiligen Komponentencodes 4 erfolgt getrennt und individuell für jede einzelne reale Komponente 5. Das Engineering-System 1 erstellt den Komponentencode 4 anhand der Programmierung und/oder der Parametrierung P der jeweils korrespondierenden virtuellen Komponente 8. Der jeweilige Komponentencode 4 ist derart bestimmt, dass dann, wenn er in die jeweilige reale Komponente 5 geladen wird, die jeweilige reale Komponente 5 entsprechend der Parametrierung P und/oder Programmierung für die jeweils korrespondierende virtuelle Komponente 8 konfiguriert. Die jeweilige reale Komponente 5 tauscht somit insbesondere entsprechend der Parametrierung P und/oder Programmierung für die jeweils korrespondierende virtuelle Komponente 8 mit einer anderen realen Komponente 5 die definierten Variablen aus.

In einem Schritt S10 stellt das Engineering-System 1 schließlich den jeweiligen Komponentencode 4 für die jeweilige reale Komponente 5 bereit. Beispielsweise kann der jeweilige Komponentencode 4 direkt in die jeweilige reale Komponente 5 geladen werden oder als jeweilige Datei gespeichert werden, so dass er zu einem späteren Zeitpunkt in die jeweilige reale Komponente 5 geladen werden kann.

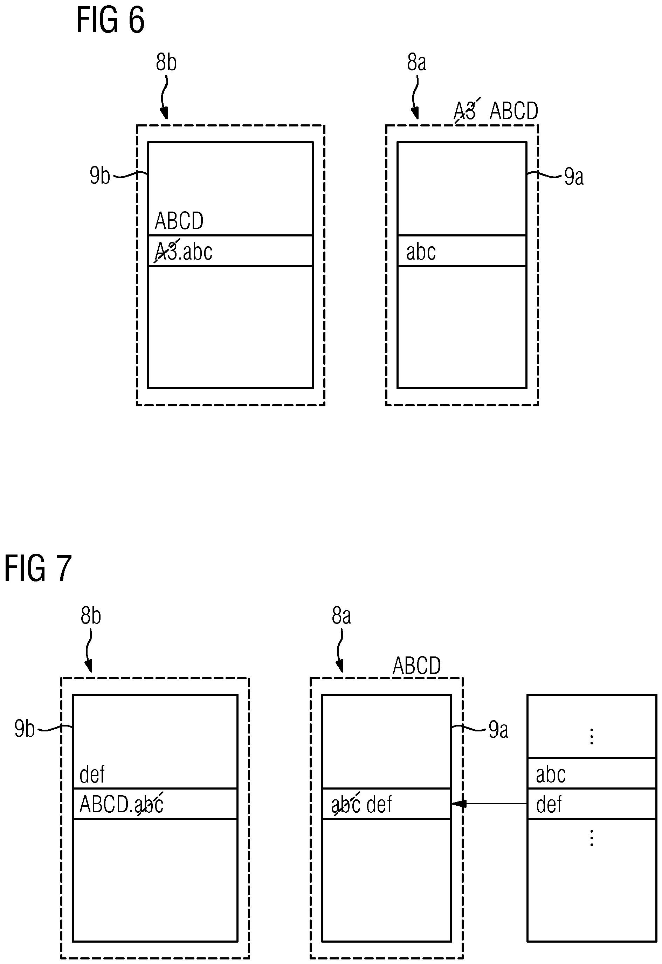

Soweit bisher erläutert, folgen die Schritte S1 bis S10 sequenziell aufeinander und werden jeweils nur einmal ausgeführt. In der Regel ist es jedoch entsprechend der Darstellung in FIG 6 möglich, dass der Benutzer 7 dem Engineering-System 1 eine Änderung des Komponentennamens der ersten virtuellen Komponente 8a vorgibt. Diese Vorgabe ist in der Regel jederzeit möglich, sowohl unmittelbar nach dem Instanziieren der entsprechenden Beschreibung 6 als auch während des Parametrierens der ersten virtuellen Komponente 8a als auch nach dem Parametrieren der ersten virtuellen Komponente 8a.

Beispielsweise hat der Benutzer 7 entsprechend der Darstellung in FIG 6 zunächst durch Instanziieren einer der Beschreibungen 6 die erste virtuelle Komponente 8a geschaffen. Das Engineering-System 1 hat der ersten virtuellen Komponente 8a beim Instanziieren den generischen Komponentennamen A3 zugeordnet. Sodann hat der Benutzer 7 festgelegt, dass über einen bestimmten Speicherplatz des Adressraums 9a der ersten virtuellen Komponente 8a die Variable mit dem ersten Variablennamen abc mit der zweiten virtuellen Komponente 8b ausgetauscht werden soll. Aufgrund dieser Festlegung hat das Engineering-System 1 dem korrespondierenden Speicherplatz des Adressraums 9b der zweiten virtuellen Komponente 8b den korrespondierenden zweiten Variablennamen A3.abc zugewiesen.

Ausgehend von diesem Zustand hat sich der Benutzer 7 entschlossen, den Komponentennamen der ersten virtuellen Komponente 8a abzuändern, gemäß FIG 6 in den Komponentennamen "ABCD". Sobald das Engineering-System 1 vom Benutzer 7 diesen Änderungswunsch entgegennimmt, führt das Engineering-System 1 entsprechend der Darstellung in FIG 6 automatisch den ersten Teil der zweiten Variablennamen für die zweite virtuelle Komponente 8b nach. Dargestellt ist dies in FIG 6 nur für den zweiten Variablennamen A3.abc, der nunmehr "ABCD.abc" lautet. Das Engineering-System 1 führt diese Anpassung jedoch für alle zweiten Variablennamen der zweiten virtuellen Komponente 8b aus, die auf die erste virtuelle Komponente 8a bezogen sind.

Weiterhin ist es in der Regel entsprechend der Darstellung in FIG 7 möglich, dass der Benutzer 7 eine einmal vorgenommene Parametrierung der ersten virtuellen Komponente 8a nachträglich ändert.

Beispielsweise hat der Benutzer 7 entsprechend der Darstellung in FIG 7 zunächst durch Instanziieren einer der Beschreibungen 6 die erste virtuelle Komponente 8a geschaffen, sodann festgelegt, dass über einen bestimmten Speicherplatz des Adressraums 9a der ersten virtuellen Komponente 8a die Variable mit dem ersten Variablennamen abc mit der zweiten virtuellen Komponente 8b ausgetauscht werden soll und weiterhin - vor oder nach dieser Festlegung - den Komponentennamen der ersten virtuellen Komponente 8a in den Komponentennamen "ABCD" abgeändert.

Ausgehend von diesem Zustand hat sich der Benutzer 7 sodann entschlossen, dass über den entsprechenden Speicherplatz des Adressraums 9a der ersten virtuellen Komponente 8a nicht die Variable mit dem ersten Variablennamen abc ausgetauscht werden soll, sondern die Variable mit dem ersten Variablennamen def. Sobald das Engineering-System 1 vom Benutzer 7 diesen Änderungswunsch entgegennimmt, führt das Engineering-System 1 entsprechend der Darstellung in FIG 7 automatisch den zweiten Teil des zweiten Variablennamens für die zweite virtuelle Komponente 8b nach. Der entsprechende zweite Variablenname lautet nach der Änderung somit nicht mehr "ABCD.abc", sondern "ABCD.def".

Tabelle 1 zeigt eine Symboltabelle gemäß dem Stand der Technik: das Engineering-System bietet dem Anwender nur eine minimale Unterstützung beim Vergeben von symbolischen Namen. Es werden z.B. nur die überhaupt verfügbaren I/O-Adressen in der Symboltabelle aufgelistet und mit generischen Namen vorbelegt. Der Anwender muss selbst bedeutungstragende Namen finden und mit der richtigen Adresse verknüpfen.

**Tabelle 1: Beispiel einer bisherigen Symboltabelle**

| Name | Datentyp | Adresse |
|---|---|---|
| Tag_1 | Bool | %I20.0 |
| Tag_2 | Bool | %I20.1 |
| Tag_3 | Bool | %I20.2 |
| Tag_4 | Bool | %I20.3 |

Tabelle 2 zeigt eine Symboltabelle gemäß der vorliegenden Erfindung: das Engineering-System bietet dem Anwender Unterstützung beim Vergeben von symbolischen Namen ("sprechende" Namen).

**Tabelle 2: Beispiel einer gemäß der Erfindung vom Engineering-System automatisch erstellten Symboltabelle**

| Name | Datentyp | Adresse |
|---|---|---|
| Control device_1-Status-Reverse | Bool | %I10.0 |
| Control device_1-Status-OFF | Bool | %I10.1 |
| Control device_1-Status-Forward | Bool | %110.2 |
| Control device_1-Event-PrewarningOverload | Bool | %I10.3 |
| Control device_1-Status-InterlockingTimeActive | Bool | %I10.4 |
| Control device_1-Status-RemoteMode | Bool | %I10.5 |
| Control device_1-Status-GroupFault | Bool | %I10.6 |
| Control device_1-Status-GroupWarning | Bool | %I10.7 |

Auf Basis von im Engineering-System hinterlegten Metawissen besitzt das Engineering-System die Information, welche I/O-Adresse welche Bedeutung hat. Das Engineering-System leitet daraus einen symbolischen Namen ab und verknüpft ihn in der Symboltabelle mit der I/O-Adresse. Zusätzlich bekommt der Name noch einen Präfix, der sich aus einer eindeutigen Gerätekennung ableitet, damit auch viele gleichartige Geräte einer Anlage eindeutige Symbole erhalten. Der Anwender braucht damit die Symboltabelle für die entsprechenden Geräte nicht mehr selbst zu erstellen.

Zusammengefasst betrifft die vorliegende Erfindung somit folgenden Sachverhalt:
Ein Engineering-Systems 1 weist instanziierbare Beschreibungen 6 von möglichen Komponenten 5 eines realen Automatisierungssystems auf. Das Engineering-System 1 nimmt von einem Benutzer 7 Instanziierungen der Beschreibungen 6 entgegen und definiert korrespondierende virtuelle Komponenten 8. Es bildet mindestens ein Paar miteinander kommunizierender virtueller Komponenten 8a, 8b, die jeweils eine erste und eine zweite virtuelle Komponente 8a, 8b umfassen. Das Engineering-System 1 bildet jeweilige virtuelle Adressräume 9a, 9b der virtuellen Komponenten 8a, 8b 1:1 aufeinander ab. Es nimmt vom Benutzer 7 für die erste virtuelle Komponente 8a eine Parametrierung P entgegen, die festlegt, an welcher Stelle des virtuellen Adressraums 9a der ersten virtuellen Komponente 8a welche Variable mit der zweiten virtuellen Komponente 8b ausgetauscht werden soll. Es nimmt vom Benutzer 7 unter Verwendung von Variablennamen, unter denen im Rahmen einer Programmierung der zweiten virtuellen Komponente 8b auf Stellen des virtuellen Adressraums 9b der zweiten virtuellen Komponente 8b zugegriffen werden kann, eine Programmierung für die zweite virtuelle Komponente 8b entgegen. Es erstellt getrennt für die einzelnen realen Komponenten 5 anhand der Parametrierung P und/oder der Programmierung der jeweils korrespondierenden virtuellen Komponente 8 den jeweiligen Komponentencode 4 und stellt ihn für die jeweilige reale Komponente 5 bereit. Das Engineering-System 1 legt die Variablennamen aufgrund der Parametrierung P der ersten virtuellen Komponente 8a automatisch und parametrierungsspezifisch fest.

Die vorliegende Erfindung weist viele Vorteile auf. Insbesondere muss sich der Benutzer 7 des Engineering-Systems 1 nicht mehr mit den Details bei der Namensgebung von Variablen beschäftigen. Er kann sich auf die für ihn relevanten technologischen Funktionen konzentrieren. Weiterhin können die Variablennamen derart bestimmt sein, dass sie ihre Bedeutung für den Benutzer 7 ohne weiteres erkennbar ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Erstellen von Komponentencode (4) für reale Komponenten (5) eines realen Automatisierungssystems mittels eines Engineering-Systems (1),
- wobei innerhalb des Engineering-Systems (1) instanziierbare Beschreibungen (6) von möglichen realen Komponenten (5) hinterlegt sind,
- wobei das Engineering-System (1) von einem Benutzer (7) des Engineering-Systems (1) Instanziierungen der Beschreibungen (6) entgegennimmt, mit den instanziierten Beschreibungen (6) korrespondierende virtuelle Komponenten (8) definiert und den virtuellen Komponenten (8) Komponentennamen zuordnet,
- wobei das Engineering-System (1) mindestens ein Paar von virtuellen Komponenten (8a, 8b) bildet, die jeweils eine erste und eine zweite virtuelle Komponente (8a, 8b) umfassen, die miteinander kommunizieren sollen,
- wobei das Engineering-System (1) für das jeweilige Paar jeweilige virtuelle Adressräume (9a, 9b) der jeweiligen ersten und zweiten virtuellen Komponenten (8a, 8b) 1:1 aufeinander abbildet,
- wobei das Engineering-System (1) vom Benutzer (7) für die jeweilige erste virtuelle Komponente (8a) eine Parametrierung (P) entgegennimmt, die festlegt, an welcher Stelle des virtuellen Adressraums (9a) der jeweiligen ersten virtuellen Komponente (8a) welche Variable mit der jeweiligen zweiten virtuellen Komponente (8b) ausgetauscht werden soll,
- wobei das Engineering-System (1) vom Benutzer (7) unter Verwendung von zweiten Variablennamen, unter denen im Rahmen einer Programmierung der jeweiligen zweiten virtuellen Komponente (8b) auf Stellen des virtuellen Adressraums (9b) der jeweiligen zweiten virtuellen Komponente (8b) zugegriffen werden kann, eine Programmierung für die jeweilige zweite virtuelle Komponente (8b) entgegennimmt,
- wobei das Engineering-System (1) getrennt für die einzelnen realen Komponenten (5) anhand der Parametrierung (P) und/ oder der Programmierung der jeweils korrespondierenden virtuellen Komponente (8) den jeweiligen Komponentencode (4) erstellt und den jeweiligen Komponentencode (4) für die jeweilige reale Komponente (5) bereitstellt,
**dadurch gekennzeichnet, dass** das Engineering-System (1) die zweiten Variablennamen aufgrund der Parametrierung (P) der jeweiligen ersten virtuellen Komponente (8a) automatisch und parametrierungsspezifisch festlegt.

2. Verfahren nach Anspruch 1,
**dadurch gekennzeichnet, dass** das Engineering-System (1) beim Instanziieren einer Beschreibung (6) der dadurch definierten virtuellen Komponente (8) als Komponentennamen einen Namen zuordnet, der aus einem für alle durch Instanziieren derselben Beschreibung (6) definierten virtuellen Komponenten (8) einheitlichen Typteil und einem für jede einzelne derartige virtuelle Komponente (8) eigenen Individualteil besteht.

3. Verfahren nach Anspruch 1 oder 2,
**dadurch gekennzeichnet, dass** bezüglich mindestens eines Paares von virtuellen Komponenten (8a, 8b) die erste virtuelle Komponente (8a) eine virtuelle Peripheriebaugruppe oder eine Mensch-Maschine-Schnittstelle ist und dass die zweite virtuelle Peripherieeinheit (8b) eine Zentraleinheit ist.

4. Verfahren nach Anspruch 1, 2 oder 3,
**dadurch gekennzeichnet,**
- **dass** die durch das Vorgeben der Parametrierung (P) für die jeweilige erste virtuelle Komponente (8a) parametrierungsspezifisch festgelegten zweiten Variablennamen jeweils einen ersten und einen zweiten Teil umfassen,
- **dass** der jeweilige erste Teil einheitlich durch den Komponentennamen der jeweiligen ersten virtuellen Komponente (8a) festgelegt ist, insbesondere mit diesem Komponentennamen identisch ist, und
- **dass** der jeweilige zweite Teil durch die Variable festgelegt ist, die aufgrund der Parametrierung (P) der jeweiligen ersten virtuellen Komponente (8a) an der korrespondierenden Stelle des virtuellen Adressraums (9b) der jeweiligen zweiten virtuellen Komponente (8b) mit der jeweiligen zweiten virtuellen Komponente (8b) ausgetauscht werden soll.

5. Verfahren nach Anspruch 4,
**dadurch gekennzeichnet,**
- **dass** das Engineering-System (1) dem Benutzer (7) im Rahmen einer Anzeige der Parametrierung (P) der jeweiligen ersten virtuellen Komponente (8a) auf die jeweilige erste virtuelle Komponente (8a) bezogene erste Variablennamen für die Variablen anzeigt, die an den entsprechenden Stellen des virtuellen Adressraums (9a) der jeweiligen ersten virtuellen Komponente (8a) mit der jeweiligen zweiten virtuellen Komponente (8b) ausgetauscht werden sollen, und
- **dass** der jeweilige zweite Teil der zweiten Variablennamen der jeweiligen zweiten virtuellen Komponente (8b) mit dem jeweils korrespondierenden ersten Variablennamen der jeweiligen ersten virtuellen Komponente (8a) übereinstimmt.

6. Verfahren nach Anspruch 4 oder 5,
**dadurch gekennzeichnet, dass** das Engineering-System (1) während oder nach einer Parametrierung der jeweiligen ersten virtuellen Komponente (8a) vom Benutzer (7) eine Änderung des Komponentennamens der jeweiligen ersten virtuellen Komponente (8a) entgegennimmt und dass das Engineering-System (1) aufgrund der Änderung des Komponentennamens der jeweiligen ersten virtuellen Komponente (8a) automatisch den ersten Teil der zweiten Variablennamen für die jeweilige zweite virtuelle Komponente (8b) nachführt.

7. Verfahren nach einem der obigen Ansprüche,
**dadurch gekennzeichnet, dass** das Engineering-System (1) nach einer Parametrierung der jeweiligen ersten virtuellen Komponente (8a) vom Benutzer (7) eine Änderung der Parametrierung (P) der jeweiligen ersten virtuellen Komponente (8a) entgegennimmt und dass das Engineering-System (1) aufgrund der Änderung der Parametrierung (P) automatisch die zweiten Variablennamen der zugehörigen Variablen für die jeweilige zweite virtuelle Komponente (8b) nachführt.

8. Computerprogramm für ein Engineering-System (1), wobei das Computerprogramm Maschinencode (3) umfasst, der von dem Engineering-System (1) abarbeitbar ist, wobei die Abarbeitung des Maschinencodes (3) durch das Engineering-System (1) bewirkt, dass das Engineering-System (1) ein Verfahren nach einem der obigen Ansprüche ausführt.

9. Engineering-System, wobei das Engineering-System mit einem Computerprogramm (2) nach Anspruch 8 programmiert ist.
